(19) Europäisches Patentamt
European Patent Office
Office européen des brevets

(11) **EP 4 287 224 A1**

(12) **EUROPEAN PATENT APPLICATION**
published in accordance with Art. 153(4) EPC

(43) Date of publication:
**06.12.2023 Bulletin 2023/49**

(21) Application number: **22746116.7**

(22) Date of filing: **12.01.2022**

(51) International Patent Classification (IPC):
*H01F 38/14* (2006.01)    *H01F 1/147* (2006.01)
*H01F 27/28* (2006.01)    *H01F 27/22* (2006.01)
*H02J 50/70* (2016.01)    *H02J 50/00* (2016.01)
*B60L 53/38* (2019.01)    *C08K 3/34* (2006.01)

(52) Cooperative Patent Classification (CPC):
Y02T 10/70; Y02T 10/7072; Y02T 90/12;
Y02T 90/14

(86) International application number:
**PCT/KR2022/000554**

(87) International publication number:
**WO 2022/164087 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.01.2021 KR 20210010694**

(71) Applicant: SKC Co., Ltd.
**Suwon-si, Gyeonggi-do 16338 (KR)**

(72) Inventors:
• KIM, Nah Young
 **Suwon-si, Gyeonggi-do 16338 (KR)**
• LEE, Seunghwan
 **Suwon-si, Gyeonggi-do 16338 (KR)**
• CHOI, Jong Hak
 **Suwon-si, Gyeonggi-do 16338 (KR)**
• KIM, Tae Kyoung
 **Suwon-si, Gyeonggi-do 16338 (KR)**

(74) Representative: **Dehns**
**St. Bride's House**
**10 Salisbury Square**
**London EC4Y 8JD (GB)**

(54) **WIRELESS CHARGING APPARATUS AND TRANSPORTATION MEANS COMPRISING SAME**

(57)    A wireless charging apparatus according to an embodiment includes a magnetic unit with a low strain rate (thermal strain) at 180 °C, wherein a position change ($\triangle$DR1) at 180 °C is 0.07 or less, to thereby provide the magnetic unit with improved heat resistance and magnetic properties and prevent deformation and damage of the magnetic unit during wireless charging, and further improve the high temperature stability and charging efficiency. Therefore, the wireless charging apparatus can be efficiently used in personal transportation means such as electric motorcycles, electric kickboards, electric scooters, electric wheelchairs, and electric bicycles, as well as transportation means such as electric vehicles requiring large-capacity power transmission between a transmitter and a receiver.

[Fig. 6]

## Description

### Technical Field

Embodiments relate to a wireless charging device and a transportation means comprising the same. More specifically, the embodiments relate to a wireless charging device with enhanced thermal resistance and charging efficiency and a transportation means comprising the same.

### Background Art

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

The wireless power transmission refers to wirelessly transmitting power through space using inductive coupling, capacitive coupling, or an electromagnetic field resonance structure such as an antenna without physical contact between a transmitter that supplies power and a receiver that receives power. The wireless power transmission is suitable for portable communication devices, electric vehicles, and the like that require a large-capacity battery. Since the contacts are not exposed, there is little risk of a short circuit, and a charging failure phenomenon in a wired method can be prevented.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

A wireless charging device generates heat due to the resistance of a coil unit and the magnetic loss of a magnetic unit during the wireless charging operation. In particular, the magnetic unit in a wireless charging device inevitably generates high-temperature heat during wireless charging. The generated heat may change the magnetic characteristics of the magnetic unit and cause safety problems such as damage to the wireless charging device and the possibility of breaking the power conversion circuit, thereby limiting its usability or reducing charging efficiency.

[Prior Art Document]

[Patent Document]

(Patent Document 1) Korean Laid-open Patent Publication No. 2011-0042403

### Disclosure of Invention

### Technical Problem

The present invention is devised to solve the problems of the prior art.

The technical problem to be solved by the present invention is to provide a wireless charging device that can enhance the thermal resistance and magnetic characteristics by comprising a magnetic unit having a small displacement ($\Delta DR1$) at a temperature of 150 to 180°C, specifically 180°C, which is a temperature at which the reliability of the magnetic unit for a vehicle is evaluated.

Another technical problem to be solved by the present invention is to provide a transportation means comprising the wireless charging device.

### Solution to Problem

According to an embodiment, there is provided a wireless charging device, which comprises a coil unit; and a magnetic unit disposed on the coil unit, wherein the magnetic unit has a displacement ($\Delta DR1$) at 180°C represented by the following Equation 1 of 0.07 or less:

[Equation 1]

$$\Delta DR1 = \frac{D_{180} - D_{25}}{Ms}$$

Here, $D_{25}$ is the amount of displacement at 25°C measured by dynamic mechanical analysis (DMA), $D_{180}$ is the amount of displacement at 180°C measured by dynamic mechanical analysis (DMA), and Ms is 46 mm, which is the length of a sample having a rectangular parallelepiped shape having a length of 60 mm, a width of 13 mm, and a thickness of 1 mm, excluding the parts held by jigs. The frequency in the dynamic mechanical analysis is 1 Hz, and the dynamic mechanical analysis is carried out in a DMA multi-strain mode, a temperature ramp method, and a dual cantilever clamp.

According to another embodiment, there is provided a transportation means, which comprises a wireless charging device, wherein the wireless charging device comprises a coil unit; and a magnetic unit disposed on the coil unit, and the magnetic unit has a displacement (ΔDR1) at 180°C represented by the above Equation 1 of 0.07 or less.

**Advantageous Effects of Invention**

According to the embodiment, the wireless charging device of the present invention comprises a magnetic unit having a small deformation (thermal deformation) at 180°C as it has a displacement (ΔDR1) at 180°C of 0.07 or less. Thus, since its thermal resistance and magnetic characteristics are further enhanced, it is possible to prevent deformation and damage of the magnetic unit during wireless charging and to enhance its high-temperature stability and charging efficiency.

Accordingly, the wireless charging device can be advantageously used in electric vehicles requiring large-capacity power transmission between a transmitter and a receiver, as well as various personal transportation means such as electric motorcycles, electric kickboards, electric scooters, electric wheelchairs, electric bicycles, and the like.

**Brief Description of Drawings**

Fig. 1 is an exploded perspective view of a wireless charging device according to an embodiment.
Fig. 2 is a perspective view of the wireless charging device according to an embodiment.
Fig. 3a is a cross-sectional view of the wireless charging device cut along the line A-A' in Fig. 2.
Fig. 3b is a cross-sectional view of a wireless charging device according to another embodiment.
Fig. 4 is a drawing for illustrating a magnetic sheet (magnetic unit) sample mounted on a cantilever clamp of the dynamic mechanical analysis (DMA) and Ms according to an embodiment of the present invention.
Fig. 5 is a drawing showing the movement of a magnetic sheet (magnetic unit) sample mounted on a cantilever clamp of the DMA according to an embodiment of the present invention and the displacement according thereto.
Fig. 6 is a graph of DMA test results showing the length of the polymer-type magnetic unit of Example 3 displaced with respect to temperature.
Fig. 7 is a graph of DMA test results showing the length of the polymer-type magnetic unit of Comparative Example 2 displaced with respect to temperature.
Fig. 8 illustrates a process of forming a polymer-type magnetic unit through a mold according to an embodiment.
Fig. 9 shows a transportation means (electric vehicle) provided with a wireless charging device according to an embodiment.

Best Mode for Carrying out the Invention

Hereinafter, specific embodiments for implementing the idea of the present invention will be described in detail with reference to the drawings.

Further, in the description of the present invention, if it is determined that a detailed description of a related known constitution or function may obscure the gist of the present invention, the detailed description thereof will be omitted.

In addition, in the accompanying drawings, some components are exaggerated, omitted, or schematically illustrated, and the size of each component does not fully reflect the actual size.

The terms in the present specification are used only to describe specific embodiments and are not intended to limit the present invention. A singular expression encompasses a plural expression unless the context clearly dictates otherwise.

The same reference numerals in the present specification refer to the same elements.

In the present specification, in the case where an element is mentioned to be formed "on" or "under" another element, it means not only that one element is directly formed "on" or "under" another element, but also that one element is indirectly formed on or under another element with other element(s) interposed between them.

In addition, the term on or under with respect to each element may be referenced to the drawings. For the sake of description, the sizes of individual elements in the appended drawings may be exaggeratedly depicted, and they may differ from the actual sizes.

In addition, the term "comprising," as used herein, specifies a particular characteristic, region, integer, step, operation, element, and/or component, and it does not exclude the presence or addition of other specific characteristic, region, integer, step, operation, element, component, and/or group.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

**[Wireless charging device]**

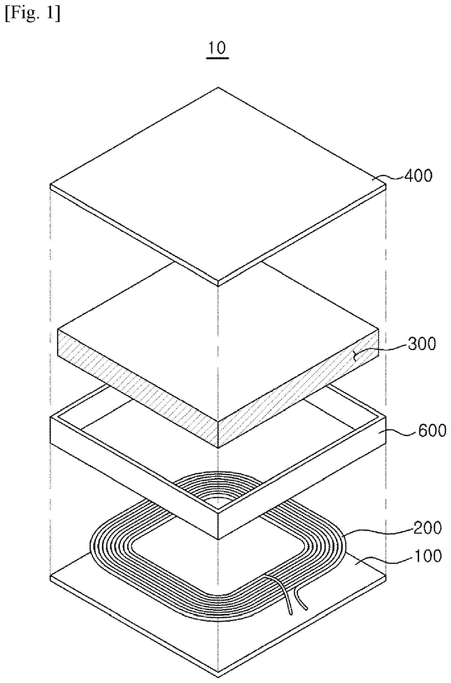

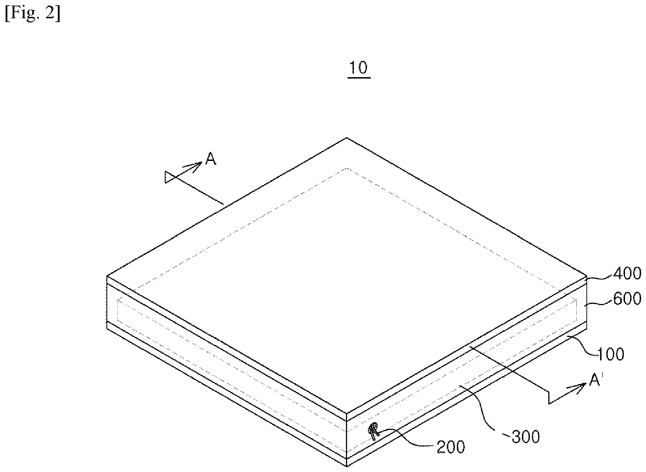

Figs. 1 and 2 are each an exploded perspective view and a perspective view of a wireless charging device according to an embodiment.

Referring to Figs. 1 and 2, the wireless charging device (10) according to an embodiment of the present invention comprises a coil unit (200); and a magnetic unit (300) disposed on the coil unit (200). In addition, the wireless charging device (10) may further comprise a support unit (100) for supporting the coil unit (200), a shield unit (400) disposed on the magnetic unit, and a housing (600) for protecting the components.

In the wireless charging device according to an embodiment of the present invention, the magnetic unit has a displacement ($\Delta DR1$) at 180°C represented by the following Equation 1 of 0.07 or less:

$$[\text{Equation 1}]$$

$$\Delta DR1 = \frac{D_{180} - D_{25}}{Ms}$$

Here, $D_{25}$ is the amount of displacement at 25°C measured by dynamic mechanical analysis (DMA), $D_{180}$ is the amount of displacement at 180°C measured by dynamic mechanical analysis (DMA), and Ms is 46 mm, which is the length of a sample having a rectangular parallelepiped shape having a length of 60 mm, a width of 13 mm, and a thickness of 1 mm, excluding the parts held by jigs.

The frequency in the dynamic mechanical analysis is 1 Hz, and the dynamic mechanical analysis is carried out in a DMA multi-strain mode, a temperature ramp method, and a dual cantilever clamp.

According to the embodiment, the wireless charging device of the present invention comprises a magnetic unit having a small deformation (thermal deformation) at 180°C as it has a displacement ($\Delta DR1$) at 150 to 180°C of 0.07 or less, which is the reliability evaluation temperature of a magnetic unit for vehicles. Thus, since its thermal resistance and magnetic characteristics are further enhanced, it is possible to prevent deformation and damage of the magnetic unit during wireless charging and to further enhance its high-temperature stability and charging efficiency.

Hereinafter, each constitutional element of the wireless charging device will be described in detail.

**Coil unit**

The wireless charging device according to an embodiment of the present invention comprises a coil unit through which an alternating current flows to generate a magnetic field.

The coil unit may comprise a conductive wire.

The conductive wire comprises a conductive material. For example, the conductive wire may comprise a conductive metal. Specifically, the conductive wire may comprise at least one metal selected from the group consisting of copper, nickel, gold, silver, zinc, and tin.

In addition, the conductive wire may have an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may have a diameter of, for example, 1 mm to 10 mm, 2 mm to 7 mm, or 3 mm to 5 mm.

The conductive wire may be wound in the form of a planar coil. Specifically, the planar coil may comprise a planar spiral coil. In addition, the planar shape of the coil may be an ellipse, a polygon, or a polygonal shape with rounded corners, but it is not particularly limited thereto.

The planar coil may have an outer diameter of 5 cm to 100 cm, 10 cm to 50 cm, 10 cm to 30 cm, 20 cm to 80 cm, or 50 cm to 100 cm. As a specific example, the planar coil may have an outer diameter of 10 cm to 50 cm.

In addition, the planar coil may have an inner diameter of 0.5 cm to 30 cm, 1 cm to 20 cm, or 2 cm to 15 cm.

The number of turns of the planar coil may be 1 to 50 times, 5 to 30 times, 5 to 20 times, or 7 to 15 times. As a specific example, the planar coil may be formed by winding the conductive wire 7 to 15 times.

In addition, the distance between the conductive wires in the planar coil shape may be 0.1 cm to 1 cm, 0.1 cm to 0.5 cm, or 0.5 cm to 1 cm.

Within the preferred plane coil dimensions and specification ranges as described above, it can be appropriately used in the fields such as electric vehicles requiring large-capacity power transmission, as well as various personal transportation means such as electric motorcycles, electric kickboards, electric scooters, electric wheelchairs, electric bicycles, and the like.

The coil unit may be disposed to be spaced apart from the magnetic unit by a predetermined interval. For example, the spaced distance between the coil unit and the magnetic unit may be 0.2 mm or more, 0.5 mm or more, 0.2 mm to 3 mm, or 0.5 mm to 2 mm.

**Magnetic unit**

The magnetic unit may form a magnetic path of a magnetic field formed around the coil unit and is disposed between the coil unit and the shield unit.

The magnetic unit may be disposed to be spaced apart from the shield unit by a predetermined interval. For example, the spaced distance between the magnetic unit and the shield unit may be 3 mm or more, 5 mm or more, 3 mm to 10 mm, or 4 mm to 7 mm.

In addition, the magnetic unit may be disposed to be spaced apart from the coil unit by a predetermined interval. For example, the spaced distance between the magnetic unit and the coil unit may be 0.2 mm or more, 0.5 mm or more, 0.2 mm to 3 mm, or 0.5 mm to 2 mm.

The magnetic unit may have a displacement ($\Delta DR1$) at 180°C represented by the above Equation 1 of 0.07 or less. Specifically, $\Delta DR1$ may be less than 0.07, 0.068 or less, 0.065 or less, 0.063 or less, 0.05 or less, 0.04 or less, 0.03 or less, 0.02 or less, 0.01 or less, 0.008 or less, 0.007 or less, or 0.005 or less. Alternatively, the magnetic unit may have a displacement ($\Delta DR1$) at 180°C represented by the above Equation 1 of 0.

$\Delta DR1$ refers to the ratio of a difference ($D_{180} - D_{25}$) between the amount of displacement ($D_{180}$) at 180°C and the amount of displacement ($D_{25}$) at 25°C measured by the DMA to Ms. If $\Delta DR1$ satisfies the above range, the thermal resistance and magnetic characteristics can be further enhanced. In such a case, it is possible to minimize the occurrence of deformation and breakage of the magnetic unit at high temperatures, thereby enhancing the charging efficiency.

The DMA is a technique used to measure the thermal characteristics of substances. According to an embodiment of the present invention, in order to measure the thermal resistance of a magnetic unit, such characteristics as a change in location of the magnetic unit and a changed length according to a temperature increase may be checked. For example, mechanical properties of deformation or stress of the magnetic unit may be measured using functions of time, temperature, and frequency.

Specifically, in the DMA, DMA Q800 equipment of TA may be used at -20 to 200°C and a frequency of 1Hz, a sample of a magnetic unit (e.g., magnetic sheet) to measure its mechanical properties is fixed using a clamp and a drive shaft, and a dynamic stimulus of stress or strain is applied to the magnetic unit sample using a driving motor to measure displacement (deformation) of the magnetic unit sample by a sensor.

The DMA is carried out in a DMA multi-strain mode, a temperature ramp method, and a dual cantilever clamp.

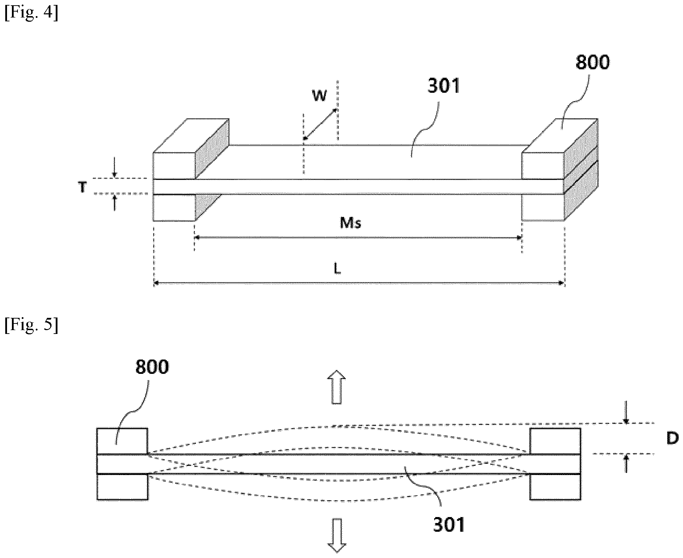

Specifically, in order to measure the displacement characteristics of the magnetic unit with respect to temperature, referring to Figs. 4 and 5, for example, a magnetic unit sheet sample (301) is mounted on a cantilever clamp (800) of the DMA. Here, in Fig. 4, L is the length of the sample, Ms is the length of the sample excluding the parts held by the jigs, W is the width of the sample, and T is the thickness of the sample. In Fig. 5, the direction of the arrows located near the sample indicated in the solid line shows the movement of the sample (301) with respect to temperature, and D indicates the amount of displacement of the sample measured by the movement of the sample.

According to an embodiment of the present invention, as shown in Fig. 4, Ms is the length of the sample (magnetic unit, for example, magnetic sheet) having a rectangular parallelepiped shape having a length (L) of 60 mm, a width (W) of 13 mm, and a thickness (T) of 1 mm, excluding the parts in a total length of 14 mm held by the jigs at the ends of the sample (i.e., the clamped parts in a length of about 7 mm at the ends of the sample) in a dual cantilever clamp (800). According to an embodiment of the present invention, Ms is 46 mm.

According to an embodiment of the present invention, the amount of displacement ($D_{180}$) at 180°C may be less than 3.5 mm, 3.2 mm or less, 3.0 mm or less, 2.9 mm or less, 2.5 mm or less, 2.0 mm or less, 1.5 mm or less, 1.0 mm or less, 0.5 mm or less, or 0.3 mm or less. Alternatively, the amount of displacement ($D_{180}$) at 180°C may be 0.

If $D_{180}$ satisfies the above range, the thermal resistance and magnetic characteristics can be further enhanced. Further, it is possible to minimize the occurrence of deformation and breakage of the magnetic unit at high temperatures, thereby enhancing the charging efficiency.

According to an embodiment of the present invention, the amount of displacement ($D_{25}$) at 25°C may be 0.2 mm or less, 0.1 mm or less, 0.01 mm or less, or 0.001 mm or less, specifically, 0 mm.

The difference ($D_{180}$ - $D_{25}$) between the amount of displacement ($D_{180}$) at 180°C and the amount of displacement ($D_{25}$) at 25°C would be the same as the amount displacement ($D_{180}$) at 180°C if $D_{25}$ is 0. Specifically, it may be less than 3.5 mm, 3.2 mm or less, 3.0 mm or less, 2.9 mm or less, 2.5 mm or less, 2.0 mm or less, 1.5 mm or less, 1.0 mm or less, 0.5 mm or less, or 0.3 mm or less.

If $D_{180}$ - $D_{25}$ satisfies the above range, the thermal resistance and magnetic characteristics can be further enhanced. Further, it is possible to minimize the occurrence of deformation and breakage of the magnetic unit at high temperatures, thereby enhancing the charging efficiency.

According to another embodiment of the present invention, the magnetic unit may have a displacement (ΔDR2) at 195°C represented by the following Equation 2 of 0.20 or less.

$$[\text{Equation 2}]$$

$$\Delta DR2 = \frac{D_{195} - D_{25}}{Ms}$$

Here, $D_{195}$ is the amount of displacement at 195°C measured by dynamic mechanical analysis (DMA), and $D_{25}$ and Ms are as described above.

Specifically, ΔDR2 may be less than 0.20, 0.19 or less, 0.185 or less, 0.183 or less, 0.18 or less, 0.15 or less, 0.10 or less, 0.09 or less, 0.08 or less, 0.07 or less, 0.06 or less, or 0.054 or less.

ΔDR2 refers to the ratio of a difference ($D_{195}$ - $D_{25}$) between the amount of displacement ($D_{195}$) at 195°C and the amount of displacement ($D_{25}$) at 25°C measured by the DMA to Ms. If ΔDR2 satisfies the above range, the thermal resistance and magnetic characteristics can be further enhanced.

According to an embodiment of the present invention, the amount of displacement ($D_{195}$) at 195°C may be 10.0 mm or less, 9.5 mm or less, 9.0 mm or less, 8.5 mm or less, 8.4 mm or less, 8.0 mm or less, 7.5 mm or less, 7.0 mm or less, 5.0 mm or less, 4.0 mm or less, 3.0 mm or less, 2.5 mm or less, 2.0 mm or less, 1.5 mm or less, 1.0 mm or less, 0.5 mm or less, or 0.3 mm or less.

If $D_{195}$ satisfies the above range, the thermal resistance and magnetic characteristics can be further enhanced.

The difference ($D_{195}$ - $D_{25}$) between the amount of displacement ($D_{195}$) at 195°C and the amount of displacement ($D_{25}$) at 25°C would be the same as the amount of displacement ($D_{195}$) at 195°C if $D_{25}$ is 0. Specifically, it may be 10.0 mm or less, 9.5 mm or less, 9.0 mm or less, 8.5 mm or less, 8.4 mm or less, 8.0 mm or less, 7.5 mm or less, 7.0 mm or less, 5.0 mm or less, 4.0 mm or less, 3.0 mm or less, 2.5 mm or less, 2.0 mm or less, 1.5 mm or less, 1.0 mm or less, 0.5 mm or less, or 0.3 mm or less.

If $D_{195}$ - $D_{25}$ satisfies the above range, the thermal resistance and magnetic characteristics can be further enhanced. Further, it is possible to minimize the occurrence of deformation and breakage of the magnetic unit at high temperatures, thereby enhancing the charging efficiency.

According to another embodiment of the present invention, the magnetic unit may have a ratio (ΔDR) of the displacement (ΔDR1) at 180°C to the displacement (ΔDR2) at 195°C represented by the following Equation 3 of 0.35 or less:

$$[\text{Equation 3}]$$

$$\Delta DR = \frac{\Delta DR1}{\Delta DR2}$$

Specifically, ΔDR may be less than 0.35, 0.345 or less, 0.32 or less, 0.30 or less, 0.20 or less, 0.15 or less, or 0.12 or less. If ΔDR satisfies the above range, the thermal resistance and magnetic characteristics can be further enhanced.

Meanwhile, according to still another embodiment of the present invention, the magnetic unit may have an amount of displacement (DPT) with respect to a temperature change represented by the following Equation 4 of 0.2/50°C or less:

[Equation 4]

$$DPT = \frac{D_{180} - D_{130}}{Ms \times (180°C - 130°C)}$$

Here, $D_{130}$ is the amount of displacement at 130°C measured by dynamic mechanical analysis (DMA), and $D_{180}$ and Ms are as described above.

Specifically, DPT may be 0.1/50°C or less, 0.07/50°C or less, 0.068/50°C or less, 0.065/50°C or less, 0.063/50°C or less, 0.06/50°C or less, 0.05/50°C or less, 0.04/50°C or less, 0.03/50°C or less, 0.02/50°C or less, 0.01/50°C or less, 0.008/50°C or less, or 0.007/50°C or less.

DPT refers to the amount of displacement with respect to a temperature change. Specifically, it is expressed as a ratio of the difference ($D_{180}$ - $D_{130}$) between the amount of displacement ($D_{180}$) at 180°C and the amount of displacement ($D_{130}$) at 130°C measured by the DMA to the product of Ms and a temperature change of 50°C.

According to an embodiment of the present invention, if the magnetic unit satisfies DPT of the above range, it is possible to minimize the occurrence of deformation and breakage of the magnetic unit at high temperatures, thereby enhancing the charging efficiency.

$D_{130}$ may be 0.2 mm or less, 0.1 mm or less, 0.01 mm or less, or 0.001 mm or less, specifically, 0 mm.

The difference ($D_{180}$ - $D_{130}$) between the amount of displacement ($D_{180}$) at 180°C and the amount of displacement ($D_{130}$) at 130°C would be the same as the amount of displacement ($D_{180}$) at 180°C if $D_{130}$ is 0. The difference ($D_{180}$ - $D_{130}$) between the amount of displacement ($D_{180}$) at 180°C and the amount of displacement ($D_{130}$) at 130°C may be specifically less than 3.5 mm, 3.2 mm or less, 3.0 mm or less, 2.9 mm or less, 2.5 mm or less, 2.0 mm or less, 1.5 mm or less, 1.0 mm or less, 0.5 mm or less, or 0.3 mm or less.

If $D_{180}$ - $D_{130}$ satisfies the above range, the thermal resistance and magnetic characteristics can be further enhanced.

The starting temperature of displacement of the magnetic unit may be 150°C or higher. The starting temperature of displacement of the magnetic unit may be, for example, 155°C or higher, for example, 160°C or higher, for example, 165°C or higher, for example, 168°C or higher, for example, 175°C or higher, for example, 178°C or higher, for example, 180°C or higher, for example, 183 °C or higher. As the starting temperature of displacement of the magnetic unit is higher, the thermal resistance of the magnetic unit may be enhanced, thereby further enhancing the magnetic characteristics and charging efficiency.

If the starting temperature of displacement of the magnetic unit is lower than 150°C, the amount of displacement of the magnetic unit may be increased, thereby deteriorating the magnetic characteristics and charging efficiency.

According to an embodiment of the present invention, the magnetic unit may comprise a polymer-type magnetic unit comprising a filler and a binder resin.

The displacement, specifically, the amount of displacement, the displaced length, and the starting temperature of displacement of the polymer-type magnetic unit may vary depending on the type, particle size, and content of the filler contained in the polymer-type magnetic unit. Alternatively, it may vary depending on the type and content of the binder resin contained in the polymer-type magnetic unit. Alternatively, it may vary depending on the type and content of additives added to the polymer-type magnetic unit. Alternatively, since it may vary depending on the combination constituting the polymer-type magnetic unit, an appropriate type and content of the filler, the binder, and/or the additives may be selected to effectively control the displacement of the polymer-type magnetic unit.

The magnetic unit may further comprise a metallic magnetic unit, for example, a nanocrystalline magnetic unit.

In addition, the magnetic unit may further comprise an oxide-based magnetic unit.

The magnetic unit may comprise a composite thereof.

**Polymer-type magnetic unit**

The magnetic unit may comprise a polymer-type magnetic unit comprising a binder resin and a filler. Specifically, the magnetic unit may comprise a polymer-type magnetic unit comprising a binder resin and a filler dispersed in the binder resin. The polymer-type magnetic unit may comprise a polymer-type magnetic block (PMB).

Since the fillers are combined with each other by the binder resin, the polymer-type magnetic unit may have fewer defects over a large area and less damage caused by an impact.

The filler may be an oxide filler such as ferrite (Ni-Zn-based, Mg-Zn-based, Mn-Zn-based ferrite, and the like); a metallic filler such as permalloy, sendust, and nanocrystalline magnetic materials; or a mixed powder thereof. More specifically, the filler may be sendust particles having a Fe-Si-Al alloy composition.

As an example, the filler may have a composition of the following Formula 1.

[Formula 1]     $Fe_{1-a-b-c}Si_a X_b Y_c$

In the above formula, X is Al, Cr, Ni, Cu, or a combination thereof; Y is Mn, B, Co, Mo, or a combination thereof; $0.01 \leq a \leq 0.2$, $0.01 \leq b \leq 0.1$, and $0 \leq c \leq 0.05$. Specifically, in the above formula, X may be Al, Cr, or a combination thereof.

The filler may comprise sendust.

The filler may have an average particle diameter (D50) in the range of about 1 $\mu$m to 300 $\mu$m, about 10 $\mu$m to 200 $\mu$m, or about 30 $\mu$m to 150 $\mu$m. If the filler has an average particle diameter satisfying the above range, it is possible to achieve a magnetic unit having a small deformation (thermal deformation) at 180°C. As a result, since its thermal resistance and magnetic characteristics are enhanced, it is possible to prevent deformation and damage of the magnetic unit during wireless charging and to enhance its high-temperature stability and charging efficiency.

The filler may be employed in an amount of 60% by weight or more, 70% by weight or more, or 85% by weight or more, based on the total weight of the polymer-type magnetic unit.

For example, the polymer-type magnetic unit may comprise the filler in an amount of 60% by weight to 90% by weight, 70% by weight to 90% by weight, 75% by weight to 90% by weight, 78% by weight to 90% by weight, 80% by weight to 90% by weight, 85% by weight to 90% by weight, 87% by weight to 90% by weight, or 89% by weight to 90% by weight. If the content of the filler is less than 60% by weight, the displacement of the magnetic unit increases, which deteriorates the thermal resistance of the magnetic unit, so that deformation and breakage of the magnetic unit may occur at high temperatures, thereby reducing the magnetic characteristics and reducing the charging efficiency.

The binder resin may have a melting point (Tm) of 150 to 210°C. For example, the melting point (Tm) of the binder resin may be 160 to 200°C, for example, 160 to 180°C. If the melting point (Tm) of the binder resin satisfies the above range, it is possible to minimize the displacement at a temperature of 150 to 180°C. Thus, since the thermal resistance and magnetic characteristics of the magnetic unit are further enhanced, it is possible to enhance the charging efficiency.

The binder resin may comprise at least one selected from the group consisting of a polyimide resin, a polyamide resin, a polyamide-imide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin.

The binder resin may be a curable resin. Specifically, the binder resin may be a photocurable resin and/or a thermosetting resin. In particular, it may be a resin capable of exhibiting adhesiveness upon curing. More specifically, the binder resin may be a resin comprising at least one functional group or moiety that can be cured by heat such as a glycidyl group, an isocyanate group, a hydroxyl group, a carboxyl group, or an amide group; or at least one functional group or moiety that can be cured by active energy such as an epoxide group, a cyclic ether group, a sulfide group, an acetal group, or a lactone group. Such a functional group or moiety may be, for example, an isocyanate group (-NCO), a hydroxyl group (-OH), or a carboxyl group (-COOH).

Specifically, the binder resin may comprise at least one selected from the group consisting of a polyamide resin, a polycarbonate resin, and a polypropylene resin.

In addition, although a resin having excellent thermal resistance is used as the binder resin, if it is not well mixed with the filler, the displacement at 180°C may be increased. Thus, it may be important to select the binder resin and the filler to be well mixed.

For example, the binder resin may be a polyamide resin, and the filler may be sendust.

The polymer-type magnetic unit may comprise the binder resin in an amount of 5% by weight to 40% by weight, 10% by weight to 40% by weight, 10% by weight to 20% by weight, 5% by weight to 20% by weight, 5% by weight to 15% by weight, or 7% by weight to 15% by weight.

According to an embodiment, in order to control the displacement of the magnetic unit at 180°C within the above range, the binder resin may be employed in an amount of 10% by weight to 40% by weight, and the filler may be employed in an amount of 60% by weight to 90% by weight.

According to an embodiment, in order to control the displacement of the magnetic unit at 180°C within the above range, the binder resin may be employed in an amount of 10% by weight to 20% by weight, and the filler may be employed in an amount of 80% by weight to 90% by weight.

In addition, the polymer-type magnetic unit may further comprise an additive. Specifically, the polymer-type magnetic unit may further comprise at least one insulating coating agent selected from the group consisting of phosphoric acid and silane. The insulating coating agent may be employed in an amount of 0.1 to 10% by weight based on the total weight of the polymer-type magnetic unit.

If the additive is employed in an amount within the above range, it is advantageous for reducing the displacement of the magnetic unit at 180°C, thereby enhancing the charging efficiency.

The magnetic permeability of the polymer-type magnetic unit in the frequency band of 79 kHz to 90 kHz may vary depending on the material. It may be in the range of 5 to 150,000 and may specifically be in the range of 5 to 300, 500 to 3,500, or 10,000 to 150,000 depending on the specific material. In addition, the magnetic permeability loss of the polymer-type magnetic unit in the frequency band of 79 kHz to 90 kHz may vary depending on the material. It may be in the range of 0 to 50,000 and may specifically be 0 to 1,000, 1 to 100, 100 to 1,000, or 5,000 to 50,000 depending on the specific material.

As a specific example, when the magnetic unit is a polymer-type magnetic unit, specifically, a polymer-type magnetic block, comprising a magnetic powder and a binder resin, its magnetic permeability may be 5 to 500, 5 to 130, 15 to 80, or 10 to 50, and its magnetic permeability loss may be 0 to 50, 0 to 20, 0 to 15, or 0 to 5, in the frequency band of 79 kHz to 90 kHz, specifically, 85 kHz.

The polymer-type magnetic unit may be elongated at a certain ratio. For example, the elongation of the polymer-type magnetic unit may be 0.5% or more. The elongation characteristic is difficult to obtain in a ceramic-based magnetic unit to which a polymer is not applied, which may reduce damage even if a large-area magnetic unit is distorted by an impact. Specifically, the elongation of the polymer-type magnetic unit may be 0.5% or more, 1% or more, or 2.5% or more. There is no particular limitation to the upper limit of the elongation. However, if the content of the polymer resin is increased to enhance the elongation, such physical properties as the inductance of the magnetic unit may be deteriorated. Thus, the elongation is preferably 10% or less.

The polymer-type magnetic unit has a small rate of change in physical properties before and after an impact and is significantly superior to those of conventional ferrite magnetic sheets.

In the present specification, the rate of change (%) in physical properties before and after an impact may be calculated by the following equation.

$$\text{Rate of change (\%) in physical property} = | \text{ property values before impact} -$$

$$\text{property values after impact} | / \text{ property value before impact} \times 100$$

For example, when the polymer-type magnetic unit is subjected to free-falling from a height of 1 m, it may have a rate of change in inductance of less than 5% or 3% or less before and after the impact. More specifically, the rate of change in inductance may be 0% to 3%, 0.001% to 2%, or 0.01% to 1.5%. Within the above range, since the rate of change in inductance before and after an impact is relatively small, the stability of the magnetic unit may be further enhanced.

In addition, when the polymer-type magnetic unit is subjected to free-falling from a height of 1 m, it may have a rate of change in Q factor of 0% to 5%, 0.001% to 4%, or 0.01% to 2.5%, before and after the impact. Within the above range, since the change in physical properties before and after an impact is small, the stability and impact resistance of the magnetic unit may be further enhanced.

In addition, when the polymer-type magnetic unit is subjected to free-falling from a height of 1 m, it may have a rate of change in resistance of 0% to 2.8%, 0.001% to 1.8%, or 0.1% to 1.0%, before and after the impact. Within the above range, even if it is repeatedly applied in an environment where actual impact and vibration are applied, the resistance value can be well maintained below a certain level.

In addition, when the polymer-type magnetic unit is subjected to free-falling from a height of 1 m, it may have a rate of change in charging efficiency of 0% to 6.8%, 0.001% to 5.8%, or 0.01% to 3.4%, before and after the impact. Within the above range, even if a large-area magnetic unit is repeatedly subjected to impact or distortion, its physical properties can be more stably maintained.

**Nanocrystalline magnetic unit**

The magnetic unit may further comprise a nanocrystalline magnetic unit.

If the nanocrystalline magnetic unit is applied, the higher the distance from the coil unit, the lower the resistance (Rs) even if the inductance (Ls) of the coil unit is lowered. Thus, the quality factor (Q factor: Ls/Rs) of the coil is increased, which may enhance the charging efficiency and reduce the generation of heat.

For example, the nanocrystalline magnetic unit may be a Fe-based nanocrystalline magnetic unit. Specifically, it may be a Fe-Si-Al-based nanocrystalline magnetic unit, a Fe-Si-Cr-based nanocrystalline magnetic unit, or a Fe-Si-B-Cu-Nb-based nanocrystalline magnetic unit.

More specifically, the nanocrystalline magnetic unit may be a Fe-Si-B-Cu-Nb-based nanocrystalline magnetic unit. In such a case, it is preferable that Fe is 70 to 85% by element, the sum of Si and B is 10 to 29% by element, and the sum of Cu and Nb is 1 to 5% by element (wherein % by element refers to the percentage of the number of specific elements to the total number of elements constituting the magnetic unit). Within the above composition range, an Fe-Si-B-Cu-Nb-based alloy can be easily formed into a nanophase crystalline form by thermal treatment.

The nanocrystalline magnetic unit is prepared by, for example, a rapid solidification process (RSP) by melt-spinning an Fe-based alloy. It may be prepared by performing a thermal treatment in the absence of a magnetic field for 30 minutes to 2 hours in a temperature range of 300 °C to 700 °C.

If the thermal treatment temperature is lower than 300°C, nanocrystals are not sufficiently formed, so that the desired magnetic permeability is not obtained, which requires a longer thermal treatment time. If it exceeds 700°C, the magnetic permeability may be significantly lowered by excessive thermal treatment. In addition, when the thermal treatment temperature is low, the treatment time is lengthened, and when the thermal treatment temperature is high, the treatment time is shortened, to adjust the desired magnetic permeability.

It is difficult to make the nanocrystalline magnetic unit thick due to the features of the preparation process. For example, it may be formed to a thickness of 15 $\mu$m to 35 $\mu$m.

The nanocrystalline magnetic unit may have magnetic characteristics in a specific range in the vicinity of a standard frequency for wireless charging of an electric vehicle. In addition, the nanocrystalline magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

For example, the nanocrystalline magnetic unit may have a magnetic permeability of 500 to 150,000 and a magnetic permeability loss of 100 to 50,000 at a frequency of 85 kHz. As an example, when the nanocrystalline magnetic unit comprises a crushed nanocrystalline magnetic material, it may have a magnetic permeability of 500 to 3,000 and a magnetic permeability loss of 100 to 1,000 at a frequency of 85 kHz. As another example, when the nanocrystalline magnetic unit comprises a non-crushed nanocrystalline magnetic material, it may have a magnetic permeability of 5,000 to 150,000 and a magnetic permeability loss of 1,000 to 10,000 at a frequency of 85 kHz.

**Oxide-based magnetic unit**

The magnetic unit may further comprise an oxide-based magnetic unit.

For example, the oxide-based magnetic unit may be a ferrite-based material. A specific chemical formula thereof may be represented by $MOFe_2O_3$ (wherein M is one or more divalent metal elements such as Mn, Zn, Cu, and Ni). The ferrite-based material is preferably a sintered body from the viewpoint of such magnetic characteristics as magnetic permeability. More specifically, it may be a ferrite sintered body. The ferritic material may be prepared in the form of a sheet or a block by mixing raw materials followed by calcining, pulverizing, mixing with a binder resin, molding, and sintering.

More specifically, the oxide-based magnetic unit may be a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 79 kHz to 90 kHz.

The Mn-Zn-based ferrite comprises 66% by mole to 70% by mole of iron oxide $Fe_2O_3$, 10% by mole to 20% by mole of ZnO, 8% by mole to 24% by mole of MnO, and 0.4% by mole to 2% by mole of NiO as main components and may further comprise $SiO_2$, CaO, NbzOs, $ZrO_2$, SnO, and the like as additional subcomponents. The Mn-Zn-based ferrite may be prepared in the form of a sheet or a block by mixing the main components at a predetermined molar ratio, calcining them in the air at a temperature of 800°C to 1,100°C for 1 hour to 3 hours, adding the subcomponents thereto and pulverizing them, mixing them with a binder resin such as polyvinyl alcohol (PVA) in an appropriate amount, press-molding them using a press, and sintering them by raising the temperature to 1,200°C to 1,300°C for 2 hours or longer. Thereafter, it is processed using a wire saw or a water jet and cut to a required size, if necessary.

The oxide-based magnetic unit may have magnetic characteristics in a specific range in the vicinity of a standard frequency for wireless charging of an electric vehicle. In addition, the oxide-based magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

For example, the oxide-based magnetic unit, specifically, ferritic material may have a magnetic permeability of 1,000 to 5,000, 1,000 to 4,000, or 2,000 to 4,000, and a magnetic permeability loss of 0 to 1,000, 0 to 100, or 0 to 50, at a frequency of 85 kHz.

**Process for preparing a magnetic unit**

The magnetic unit may comprise, for example, a polymer-type magnetic unit, and the polymer-type magnetic unit may be prepared by a sheet-forming process such as mixing a filler and a binder resin to form a slurry, then molding it into a sheet shape, and curing it.

In addition, it may be formed into a three-dimensional structure by a mold to prepare a large-area magnetic unit having a constant thickness using a thermoplastic resin. Specifically, a filler and a thermoplastic resin are kneaded using mechanical shear force and heat and then pelletized using a mechanical device by injection molding to prepare a block.

A conventional sheet-forming or block-forming method may be applied to the preparation process.

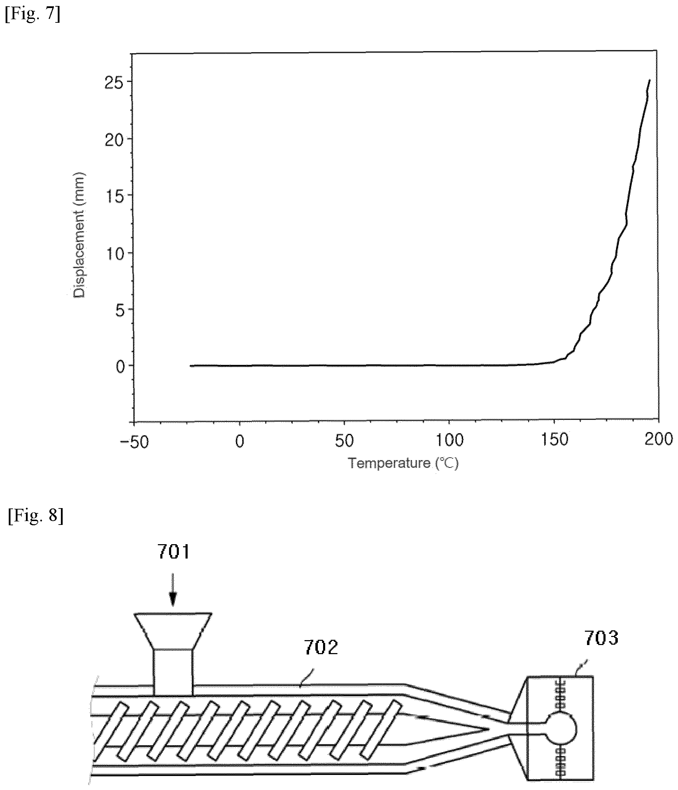

The molding may be carried out by injecting the raw materials for the magnetic unit into a mold by injection molding. More specifically, the magnetic unit may be prepared by mixing a filler and a polymer resin composition to obtain a raw material composition, and then injecting the raw material composition (701) into a mold (703) by an injection molding machine (702) as shown in Fig. 8. In such an event, the internal shape of the mold (703) may be designed as a three-dimensional structure, so that the three-dimensional structure of the magnetic unit may be easily achieved. Such a process may be advantageous in terms of the degree of freedom of the structure as compared with the case where a conventional sintered ferrite sheet is used as a magnetic unit.

**Area and thickness of a magnetic unit**

The magnetic unit may be a magnetic sheet, a magnetic sheet laminate, or a magnetic block.

The magnetic unit may have a large area. Specifically, it may have an area of 200 cm$^2$ or more, 400 cm$^2$ or more, or 600 cm$^2$ or more. In addition, the magnetic unit may have an area of 10,000 cm$^2$ or less.

The large-area magnetic unit may be configured by combining a plurality of magnetic units. In such an event, the area of the individual magnetic units may be 60 cm$^2$ or more, 90 cm$^2$ or more, or 95 cm$^2$ to 900 cm$^2$.

The magnetic sheet may have a thickness of 15 $\mu$m or more, 50 $\mu$m or more, 80 $\mu$m or more, 15 $\mu$m to 150 $\mu$m, 15 $\mu$m to 35 $\mu$m, or 85 $\mu$m to 150 $\mu$m. Such a magnetic unit may be prepared by a method of preparing a conventional film or sheet.

The magnetic sheet laminate may be one in which 20 or more or 50 or more magnetic sheets are laminated. In addition, the magnetic sheet laminate may be one in which 150 or fewer or 100 or fewer magnetic sheets are laminated.

The magnetic block may have a thickness of 1 mm or more, 2 mm or more, 3 mm or more, or 4 mm or more. In addition, the magnetic block may have a thickness of 10 mm or less.

**Shield unit**

The wireless charging device (10) according to an embodiment may further comprise a shield unit (400) that serves to increase the wireless charging efficiency through shielding of electromagnetic waves.

The shield unit is disposed on one side of the coil.

The shield unit comprises a metal plate. The material thereof may be aluminum, and other metal or alloy materials having a shielding capability of electromagnetic waves may be used.

The shield unit may have a thickness of 0.2 mm to 10 mm, 0.5 mm to 5 mm, or 1 mm to 3 mm.

In addition, the shield unit may have an area of 200 cm$^2$ or more, 400 cm$^2$ or more, or 600 cm$^2$ or more.

**Housing**

The wireless charging device (10) according to an embodiment may further comprise a housing (600) for accommodating the coil unit (200) and the magnetic unit (300).

In addition, the housing (600) allows such components as the coil unit (200), the shield unit (400), and the magnetic unit (300) to be properly disposed and assembled. The shape (structure) of the housing may be arbitrarily determined according to the components accommodated therein or according to the environment. The material and structure of the housing may be a material and structure of a conventional housing used in a wireless charging device.

**Support unit**

The wireless charging device (10) according to an embodiment may further comprise a support unit (100) for supporting the coil unit (200). The material and structure of the support unit may be a material and structure of a conventional support unit used in a wireless charging device. The support unit may have a flat plate structure or a structure in which a groove is formed in compliance with a coil shape to fix the coil unit.

**[Various examples of a wireless charging device]**

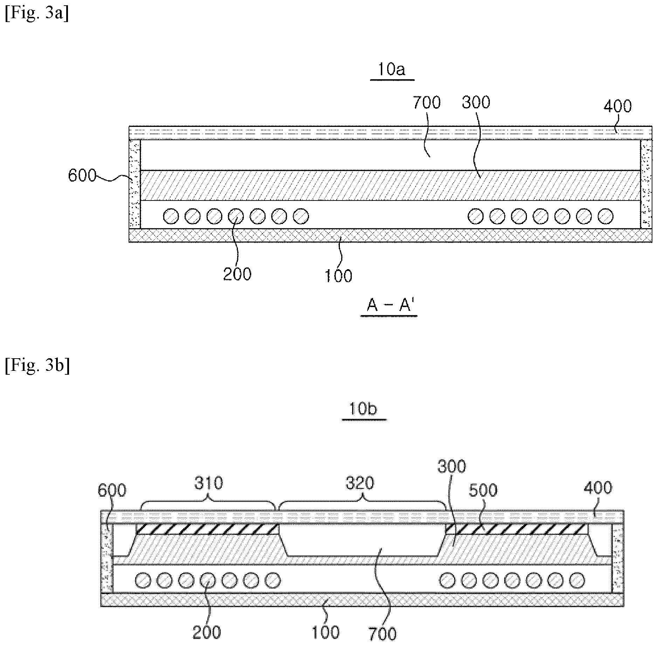

Figs. 3a and 3b show cross-sectional views of the wireless charging devices having various structures according to embodiments of the present invention.

Referring to Fig. 3a, the wireless charging device according to an embodiment comprises a coil unit (200); and a magnetic unit (300) disposed on the coil unit (200), and it may comprise a shield unit (400) spaced apart from the magnetic unit by a predetermined interval. In addition, it may further comprise an empty space or a spacer unit (700) between the magnetic unit (300) and the shield unit (400). In such an event, the magnetic unit (300) may comprise a polymer-type magnetic unit comprising a filler and a binder resin.

In addition, the magnetic unit may have a flat structure. Alternatively, the magnetic unit may have a three-dimensional structure. When the magnetic unit has a three-dimensional structure, the charging efficiency and heat dissipation characteristics may be enhanced.

Referring to Fig. 3b, the magnetic unit may comprise two or more hybrid-type magnetic units. Specifically, the magnetic unit may comprise different types of magnetic units, for example, a polymer-type magnetic unit (300) and a nanocrystalline or oxide-based magnetic unit (500).

The polymer-type magnetic unit (300) may comprise an outer part (310) corresponding to a part where the coil unit (200) is disposed; and a central part (320) surrounded by the outer part (310), wherein the outer part (310) may have a thickness greater than the thickness of the central part (320). In such an event, the outer part and the central part in the polymer-type magnetic unit may be integrally formed with each other. Alternatively, the outer part and the central part in the polymer-type magnetic unit may have the same thickness.

As described above, as the thickness of the magnetic unit near the coil where electromagnetic energy is concentrated during wireless charging is increased and as the thickness of the central magnetic unit having a relatively low electromagnetic energy density since no coil is disposed there is decreased, it is possible not only to effectively concentrate electromagnetic waves focused around the coil, thereby enhancing the charging efficiency, but also to maintain the distance between the coil and the shield unit firmly without a separate spacer, whereby it is possible to reduce the material and process costs due to the use of a spacer and the like.

In the polymer-type magnetic unit, the outer part may have a thickness that is thicker than that of the central part by 1.5 times or more. Within the above thickness ratio, it is possible to more effectively concentrate electromagnetic waves focused around the coil to enhance the charging efficiency, and it is also advantageous for heat dissipation and weight reduction. Specifically, in the polymer-type magnetic unit, the thickness ratio of the outer part to the central part may be 2 or more, 3 or more, or 5 or more. In addition, the thickness ratio may be 100 or less, 50 or less, 30 or less, or 10 or less. More specifically, the thickness ratio may be 1.5 to 100, 2 to 50, 3 to 30, or 5 to 10.

The thickness of the outer part of the polymer-type magnetic unit may be 1 mm or more, 3 mm or more, or 5 mm or more, and 30 mm or less, 20 mm or less, or 11 mm or less. In addition, the thickness of the central part of the polymer-type magnetic unit may be 10 mm or less, 7 mm or less, or 5 mm or less, and 0 mm, 0.1 mm or more, or 1 mm or more. Specifically, the outer part of the polymer-type magnetic unit may have a thickness of 5 mm to 11 mm, and the central part thereof may have a thickness of 0 mm to 5 mm.

When the thickness of the central part (320) of the polymer-type magnetic unit (300) is 0, the polymer-type magnetic unit (300) may have an empty shape in the central part (320) (e.g., a donut shape). In such a case, the polymer-type magnetic unit may effectively enhance the charging efficiency even with a smaller area.

For example, referring to Fig. 3b, the wireless charging device comprises a coil unit (200); and a magnetic unit disposed on the coil unit (200), wherein the magnetic unit may comprise a polymer-type magnetic unit (300) and a nanocrystalline or oxide-based magnetic unit (500). In addition, at least a portion of the nanocrystalline or oxide-based magnetic unit may be in contact with the shield unit. As a result, heat generated in the nanocrystalline or oxide-based magnetic unit may be effectively discharged through the shield unit. For example, when the nanocrystalline or oxide-based magnetic unit is in the form of a sheet, one side thereof in its entirety may be in contact with the shield unit. Specifically, the nanocrystalline or oxide-based magnetic unit may be attached to one side of the shield unit facing the polymer-type magnetic unit. The nanocrystalline or oxide-based magnetic unit may be attached to one side of the shield unit with a thermally conductive adhesive, thereby further enhancing the heat dissipation effect. The thermally conductive adhesive may comprise a thermally conductive material such as a metal-based, carbon-based, or ceramic-based adhesive, for example, an adhesive resin in which thermally conductive particles are dispersed.

In addition, according to an embodiment of the present invention, the magnetic unit comprises a polymer-type magnetic unit having a displacement ($\Delta DR1$) at 180°C of 0.07 or less. It may be designed in various ways within a range that does not impair the effects of the present invention in which it is arranged in various complex structures together with magnetic units of other materials.

The wireless charging device according to an embodiment of the present invention may have a charging efficiency of 85% or more, 88% or more, 89% or more, 90% or more, or 91% or more.

**[Transportation means]**

The wireless charging device according to an embodiment can be advantageously used in transportation means such as electric vehicles requiring large-capacity power transmission between a transmitter and a receiver, as well as various personal transportation means such as electric motorcycles, electric kickboards, electric scooters, electric wheelchairs, electric bicycles, and the like.

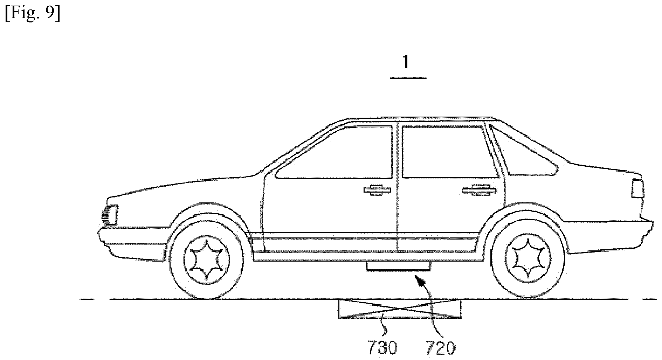

Referring to Fig. 9, the electric vehicle (1) according to an embodiment comprises a wireless charging device according to the embodiment as a receiver (720).

The wireless charging device may serve as a receiver for wireless charging of the electric vehicle (1) and may receive power from a transmitter (730) of a wireless charging system.

As described above, the transportation means comprises a wireless charging device, wherein the wireless charging device comprises a coil unit; and a magnetic unit disposed on the coil unit, and the magnetic unit has a displacement (ΔDR1) at 180°C represented by the above Equation 1 of 0.07 or less. The configuration and characteristics of each component of the wireless charging device adopted in the transportation means are as described above.

The transportation means may further comprise a battery for receiving power from the wireless charging device. The wireless charging device may receive power wirelessly and transmit it to the battery, and the battery may supply power to a driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

### Embodiments for Carrying Out the Invention

Hereinafter, specific embodiments of the present invention will be described. However, the embodiments described below are intended only to illustrate or explain the present invention. The present invention should not be limited thereto.

### Example

### Example 1: Manufacture of a wireless charging device

### Step 1: Preparation of a polymer-type magnetic unit (PMB magnetic sheet)

35% by weight of a polyamide resin (product name: L1724k, manufacturer: Daicel-Evonik) as a binder resin, 60% by weight of sendust (product name: C1F-02A, manufacturer: Crystallite Technology) as a filler, and 5% by weight of phosphoric acid and silane as additives were used to prepare pellets in an extruder under the conditions of a temperature of about 170 to 200°C and 120 to 150 rpm. The pellets were injected in an injection machine at a temperature of about 250°C to obtain a magnetic unit having a thickness of 5 mm.

### Step 2: Manufacture of a wireless charging device

The magnetic unit of step 1 was used to obtain a wireless charging device comprising a coil unit comprising a conductive wire, the magnetic unit, and a shield unit.

### Examples 2 to 4

A magnetic unit and a wireless charging device comprising the same were obtained in the same manner as in Example 1, except that the content of the filler was adjusted as shown in Table 1 below.

### Examples 5 and 6

A magnetic unit and a wireless charging device comprising the same were obtained in the same manner as in Example 1, except that the type of the binder resin was changed as shown in Table 1 below.

### Comparative Example 1

A magnetic unit and a wireless charging device comprising the same were obtained in the same manner as in Example 1, except that the content of the filler was adjusted as shown in Table 1 below.

### Comparative Example 2

A magnetic unit and a wireless charging device comprising the same were obtained in the same manner as in Example 1, except that the type of the binder resin and the content of the filler were adjusted as shown in Table 1 below.

**Comparative Example 3**

A magnetic unit and a wireless charging device comprising the same were obtained in the same manner as in Example 1, except that the contents of the binder resin and filler were adjusted as shown in Table 1 below.

**Test Example**

**(1) Dynamic mechanical analysis (DMA) test**

Analysis equipment: DMA Q800 of TA

Magnetic sheet specimen: a rectangular parallelepiped with a size of 60 mm (length) × 13 mm (width) × 1 mm (thickness)

Measuring conditions

DMA multi-strain mode

Measuring frequency: 1Hz
Temperature ramp method: -20°C to 200°C, 5°C/minute
Dual cantilever clamp: Both ends of the sample were clamped to a length of about 7 mm.

The displacement characteristics of the magnetic sheet with respect to temperature were measured under the above conditions.
The magnetic sheets (specimens) employed in the magnetic units obtained in the Examples and Comparative Examples were each put in a sample holder and fixed. The starting temperature of displacement and the displacement in the machine direction (vertical direction) with respect to temperature were measured. Here, the temperature of the sample was assumed to be the same as the temperature in the chamber of the equipment. The results are shown in Tables 2 and 3 below.

**(2) Measurement of charging efficiency**

The charging efficiency was measured by the SAE J2954 WPT2 Z2 class standard test method. Specifically, a coil unit and a frame under the SAE J2954 WPT2 Z2 class standard test specifications were used, and a magnetic unit, a spacer, and an aluminum plate were stacked to prepare a receiving pad (35 cm × 35 cm) and a transmitting pad (75 cm × 60 cm). The charging efficiency was evaluated under the same conditions of an output power of 6.6 kW at a frequency of 85 kHz.
The results are shown in Tables 2 and 3 below.

[Table 1]

| | | Polymer-type magnetic unit | | | |
|---|---|---|---|---|---|
| | | Binder resin | | Content of filler (% by weight) | Content of additive (% by weight) |
| | | Type | Content (% by weight) | | |
| Example | 1 | Polyamide | 35 | 60 | 5 |
| | 2 | Polyamide | 15 | 80 | 5 |
| | 3 | Polyamide | 6 | 89 | 5 |
| | 4 | Polyamide | 4 | 91 | 5 |
| | 5 | Polycarbonate | 6 | 89 | 5 |
| | 6 | Polypropylene | 6 | 89 | 5 |
| Comp. Example | 1 | Polyamide | 55 | 40 | 5 |
| | 2 | Polycarbonate | 95 | 0 | 5 |
| | 3 | Polyamide | 37 | 58 | 5 |

[Table 2]

| | 25°C (mm) | 130°C (mm) | 140°C (mm) | 150°C (mm) | 160°C (mm) | 170°C (mm) | 180°C (mm) | 190°C (mm) | 195°C (mm) |
|---|---|---|---|---|---|---|---|---|---|
| Ex. 1 | 0 | 0 | 0 | 0.2 | 0.7 | 1.5 | 2.9 | 6.5 | 8.4 |
| Ex. 2 | 0 | 0 | 0 | 0.1 | 0.1 | 0.15 | 0.3 | 1.5 | 2.5 |
| Ex. 3 | 0 | 0 | 0 | 0 | 0 | 0 | 0 | 0.2 | 0.3 |
| Ex. 4 | 0 | 0 | 0 | 0 | 0 | 0 | 0 | 0.15 | 0.2 |
| Ex. 5 | 0 | 0 | 0 | 0 | 0 | 0 | 0 | 0.14 | 0.19 |
| Ex. 6 | 0 | 0 | 0 | 0 | 0 | 0 | 0 | 0.14 | 0.19 |
| C. Ex. 1 | 0 | 0 | 0 | 0.3 | 1.3 | 2.7 | 4.1 | 8.1 | 11.3 |
| C. Ex. 2 | 0 | 0 | 0 | 0.4 | 2 | 5 | 9.5 | 18 | 20 |
| C. Ex. 3 | 0 | 0 | 0 | 0.2 | 1.2 | 2.3 | 3.5 | 7.8 | 10.5 |

[Table 3]

| | △DR1 | △DR2 | △DR | DPT | Charging efficiency |
|---|---|---|---|---|---|
| Ex. 1 | 0.063 | 0.183 | 0.345 | 0.063 | 85.5 |
| Ex. 2 | 0.007 | 0.054 | 0.120 | 0.007 | 88.2 |
| Ex. 3 | 0.000 | 0.007 | 0.000 | 0.000 | 90.0 |
| Ex. 4 | 0.000 | 0.004 | 0.000 | 0.000 | 89.8 |
| Ex. 5 | 0.000 | 0.004 | 0.000 | 0.000 | 86.3 |
| Ex. 6 | 0.000 | 0.004 | 0.000 | 0.000 | 86.5 |
| C. Ex. 1 | 0.089 | 0.246 | 0.363 | 0.089 | Not measurable |
| C. Ex. 2 | 0.207 | 0.435 | 0.475 | 0.207 | Not measurable |

(continued)

|  | ΔDR1 | ΔDR2 | ΔDR | DPT | Charging efficiency |
|---|---|---|---|---|---|
| C. Ex. 3 | 0.076 | 0.228 | 0.333 | 0.076 | 85.0 |

As shown in Tables 1 to 3, in the wireless charging devices of the Examples according to the embodiment of the present invention, the displacement (ΔDR1) of the magnetic unit at 180°C was 0.063 or less, and the charging efficiency of the wireless charging devices was also about 85.5% or more.

Specifically, the magnetic units of Examples 1 and 2 had a displacement (ΔDR1) of 0.063 to 0.007 at 180°C, respectively. In particular, all of the magnetic units of Examples 3 to 6 had a displacement (ΔDR1) of 0.000 at 180°C.

In contrast, the magnetic units of Comparative Examples 1 to 3 had a displacement (ΔDR1) of 0.089, 0.207, and 0.076 at 180°C, respectively, indicating that the displacement at 180°C was significantly increased as compared with those of the Examples and that the charging efficiency of the wireless charging devices was also significantly reduced. In particular, in Comparative Examples 1 and 2, it was not possible to measure the charging efficiency due to a lack of magnetic characteristics.

Meanwhile, it is confirmed from the results of Examples 1 to 4 and Comparative Example 3 that the displacement of the magnetic units and the charging efficiency of the wireless charging devices significantly vary depending on the content of a filler.

Specifically, in the magnetic units of Examples 1 to 4, the displacement (ΔDR1) at 180°C could be controlled by using the same binder resin and adjusting the content of a filler. As a result, the charging efficiency could also be enhanced. In contrast, in Comparative Examples 1 and 3 in which the same binder resin was used while the content of a filler was less than 60% by weight, the displacement (ΔDR1) at 180°C was 0.076 or more, which was significantly increased as compared with the displacement (ΔDR1) in the magnetic units of Examples 1 to 4 at 180°C, and the charging efficiency of the wireless charging devices was decreased to 85%.

Further, in Examples 3, 5, and 6, the displacement and charging efficiency were compared while the binder resin in the magnetic unit was changed.

In the magnetic units of Examples 3, 5, and 6, the displacement (ΔDR1) at 180°C was as excellent as 0.000, but there was a difference in the charging efficiency. In particular, in the magnetic unit of Example 3 in which a polyamide binder resin was used and the content of a filler was 89% by weight, the displacement (ΔDR1) at 180°C was 0.000, and the charging efficiency was also 90% or more, showing a very excellent effect.

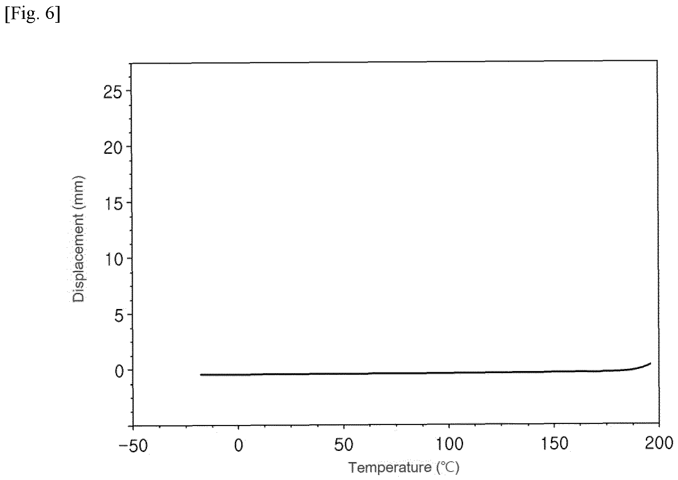

Meanwhile, Figs. 6 and 7 are graphs of DMA test results showing the length of the polymer-type magnetic unit of Example 3 and Comparative Example 2 displaced with respect to temperature.

As shown in Figs. 6 and 7, in the polymer-type magnetic unit of Example 3, even when the temperature was raised from -20 to 200°C, the displaced total length was less than about 0.4 mm, showing almost no displacement even when the temperature was raised.

In contrast, in the polymer-type magnetic unit of Comparative Example 2, the displaced length was increased steeply from 150°C or higher, and the displaced total length was about 9.5 mm at 180°C, and the displaced total length was significantly increased to about 25 mm when the temperature approached 200°C.

<Explanation of Reference Numerals>

| 1: | transportation means (electric vehicle) | | |
|---|---|---|---|
| 10, 10a, 10b: | wireless charging device | | |
| 100: | support unit | 200: | coil unit |
| 300: | magnetic unit (polymer-type magnetic unit) | | |
| 310: | outer part | 320: | central part |
| 400: | shield unit | | |
| 500: | oxide-based or nanocrystalline magnetic unit | | |
| 700: | spacer unit | 701: | raw material composition |
| 702: | injection molding machine | 703: | mold |
| 720: | receiver | 730: | transmitter |
| 301: | sample | | |
| 800: | cantilever clamp | | |

L:            total length of a sample
Ms:           length excluding the parts held by jigs among the length (L) of a
              sample
W:            width of a sample
T:            thickness of a sample
D:            displacement

**Claims**

1. A wireless charging device, which comprises a coil unit; and a magnetic unit disposed on the coil unit, wherein the magnetic unit has a displacement ($\Delta$DR1) at 180°C represented by the following Equation 1 of 0.07 or less:

[Equation 1]

$$\Delta DR1 = \frac{D_{180} - D_{25}}{Ms}$$

   wherein $D_{25}$ is the amount of displacement at 25°C measured by dynamic mechanical analysis (DMA), $D_{180}$ is the amount of displacement at 180°C measured by dynamic mechanical analysis (DMA), and Ms is 46 mm, which is the length of a sample having a rectangular parallelepiped shape having a length of 60 mm, a width of 13 mm, and a thickness of 1 mm, excluding the parts held by jigs,
   wherein the frequency in the dynamic mechanical analysis is 1 Hz, and the dynamic mechanical analysis is carried out in a DMA multi-strain mode, a temperature ramp method, and a dual cantilever clamp.

2. The wireless charging device of claim 1, wherein the magnetic unit has a displacement ($\Delta$DR2) at 195°C represented by the following Equation 2 of 0.20 or less:

[Equation 2]

$$\Delta DR2 = \frac{D_{195} - D_{25}}{Ms}$$

   wherein $D_{195}$ is the amount of displacement at 195°C measured by dynamic mechanical analysis (DMA), and $D_{25}$ and Ms are as described above.

3. The wireless charging device of claim 2, wherein the magnetic unit has a ratio ($\Delta$DR) of the displacement ($\Delta$DR1) at 180°C to the displacement ($\Delta$DR2) at 195°C represented by the following Equation 3 of 0.35 or less:

[Equation 3]

$$\Delta DR = \frac{\Delta DR1}{\Delta DR2}$$

4. The wireless charging device of claim 1, wherein the magnetic unit has an amount of displacement (DPT) with respect to a temperature change represented by the following Equation 4 of 0.2/50°C or less:

[Equation 4]

$$DPT = \frac{D_{180} - D_{130}}{Ms \times (180\text{°C} - 130\text{°C})}$$

wherein $D_{130}$ is the amount of displacement at 130°C measured by dynamic mechanical analysis (DMA), and $D_{180}$ and Ms are as described above.

5. The wireless charging device of claim 1, wherein the starting temperature of displacement of the magnetic unit is 150°C or higher.

6. The wireless charging device of claim 1, wherein the magnetic unit comprises a polymer-type magnetic unit comprising a filler and a binder resin, and
the filler is employed in an amount of 60% by weight to 90% by weight based on the total weight of the polymer-type magnetic unit.

7. The wireless charging device of claim 6, wherein the filler has an average particle diameter (D50) of 1 $\mu$m to 300 $\mu$m.

8. The wireless charging device of claim 6, wherein the filler has a composition of the following Formula 1:

$$[\text{Formula 1}] \qquad Fe_{1-a-b-c} Si_a X_b Y_c$$

in the above formula, X is Al, Cr, Ni, Cu, or a combination thereof; Y is Mn, B, Co, Mo, or a combination thereof; $0.01 \leq a \leq 0.2$, $0.01 \leq b \leq 0.1$, and $0 \leq c \leq 0.05$.

9. The wireless charging device of claim 6, wherein the binder resin has a melting point (Tm) of 150 to 210°C.

10. The wireless charging device of claim 6, wherein the binder resin comprises at least one selected from the group consisting of a polyimide resin, a polyamide resin, a polyamide-imide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin.

11. The wireless charging device of claim 6, wherein the polymer-type magnetic unit further comprises at least one an additive selected from the group consisting of phosphoric acid and silane.

12. A transportation means, which comprises a wireless charging device, wherein the wireless charging device comprises a coil unit; and a magnetic unit disposed on the coil unit, wherein the magnetic unit has a displacement ($\Delta$DR1) at 180°C represented by the following Equation 1 of 0.07 or less:

$$[\text{Equation 1}]$$

$$\Delta DR1 = \frac{D_{180} - D_{25}}{Ms}$$

wherein $D_{25}$ is the amount of displacement at 25°C measured by dynamic mechanical analysis (DMA), $D_{180}$ is the amount of displacement at 180°C measured by dynamic mechanical analysis (DMA), and Ms is 46 mm, which is the length of a sample having a rectangular parallelepiped shape having a length of 60 mm, a width of 13 mm, and a thickness of 1 mm, excluding the parts held by jigs,
wherein the frequency in the dynamic mechanical analysis is 1 Hz, and the dynamic mechanical analysis is carried out in a DMA multi-strain mode, a temperature ramp method, and a dual cantilever clamp.

[Fig. 1]

<u>10</u>

[Fig. 2]

[Fig. 3a]

<u>10a</u>

700    300

400

600

200    100

A – A'

[Fig. 3b]

<u>10b</u>

600    310    320    300    500    400

200    100    700

[Fig. 4]

[Fig. 5]

[Fig. 6]

[Fig. 7]

[Fig. 8]

[Fig. 9]

## INTERNATIONAL SEARCH REPORT

| International application No. |
|---|
| **PCT/KR2022/000554** |

| | |
|---|---|
| **A. CLASSIFICATION OF SUBJECT MATTER** | |
| **H01F 38/14**(2006.01)i; **H01F 1/147**(2006.01)i; **H01F 27/28**(2006.01)i; **H01F 27/22**(2006.01)i; **H02J 50/70**(2016.01)i; **H02J 50/00**(2016.01)i; **B60L 53/38**(2019.01)i; **C08K 3/34**(2006.01)i | |
| According to International Patent Classification (IPC) or to both national classification and IPC | |

| **B. FIELDS SEARCHED** |
|---|
| Minimum documentation searched (classification system followed by classification symbols) |
| H01F 38/14(2006.01); B60L 3/00(2006.01); B60L 50/50(2019.01); H01F 1/44(2006.01); H02J 50/00(2016.01); H02J 7/02(2006.01); H05K 9/00(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 무선(wireless), 충전(charge), 코일(coil), 자성부(magnet), 주파수(frequency) |

| **C. DOCUMENTS CONSIDERED TO BE RELEVANT** | | |
|---|---|---|
| Category* | Citation of document, with indication, where appropriate, of the relevant passages | Relevant to claim No. |
| A | JP 2008-021991 A (NITTA IND CORP.) 31 January 2008 (2008-01-31)<br>See paragraphs [0060]-[0085], claim 1 and figures 1-3. | 1-12 |
| A | KR 10-2017-0018677 A (AMOSENSE CO., LTD.) 20 February 2017 (2017-02-20)<br>See claims 1-10. | 1-12 |
| A | KR 10-2017-0032861 A (AMOGREENTECH CO., LTD.) 23 March 2017 (2017-03-23)<br>See claims 1-13. | 1-12 |
| A | KR 10-2004445 B1 (KOREA ELECTRIC POWER CORPORATION) 26 July 2019 (2019-07-26)<br>See paragraphs [0045]-[0066] and figures 3-7. | 1-12 |
| PX | KR 10-2240875 B1 (SKC CO., LTD.) 16 April 2021 (2021-04-16)<br>See entire document.<br>(This document is a published earlier application that serves as a basis for claiming priority of the present international application.) | 1-12 |

| ☐ Further documents are listed in the continuation of Box C. | ☑ See patent family annex. |
|---|---|

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 April 2022** | **21 April 2022** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2022/000554**

| Patent document cited in search report | | | Publication date (day/month/year) | Patent family member(s) | | | Publication date (day/month/year) |
|---|---|---|---|---|---|---|---|
| JP | 2008-021991 | A | 31 January 2008 | JP | 4917484 | B2 | 18 April 2012 |
| KR | 10-2017-0018677 | A | 20 February 2017 | None | | | |
| KR | 10-2017-0032861 | A | 23 March 2017 | KR | 10-1788792 | B1 | 19 October 2017 |
| KR | 10-2004445 | B1 | 26 July 2019 | KR | 10-2019-0047462 | A | 08 May 2019 |
| KR | 10-2240875 | B1 | 16 April 2021 | None | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110042403